# EUROPÄISCHE PATENTSCHRIFT

(11) **EP 1 102 803 B1**
(45) Veröffentlichungstag und Bekanntmachung des Hinweises auf die Patenterteilung: **28.04.2004**
(21) Anmeldenummer: 99931199.6
(22) Anmeldetag: 26.06.1999
(51) Int. Cl.: C08G 59/18, C08L 63/00

(54) **HÄRTER FUR EPOXIDHARZE**
HARDENER FOR EPOXY RESINS
DURCISSEURS POUR RESINES EPOXYDES

(30) Priorität: 07.07.1998 DE 19830280
(43) Veröffentlichungstag der Anmeldung: 30.05.2001
(73) Patentinhaber: Cognis Deutschland GmbH & Co. KG, 40589 Düsseldorf (DE)
(72) Erfinder: SULZBACH, Horst, D-40593 Düsseldorf (DE); THOMAS, Hans-Josef, D-40789 Monheim (DE); FOGLIANISI, Vincenzo, I-20136 Milano (IT); HUVER, Thomas, D-40625 Düsseldorf (DE)
(86) Internationale Anmeldenummer: PCT/EP1999/004456
(87) Internationale Veröffentlichungsnummer: WO 2000/002948

(56) Entgegenhaltungen:
- EP-A- 0 000 605
- EP-A- 0 387 418
- EP-A- 0 610 787
- EP-A- 0 661 314
- EP-A- 0 717 059
- WO-A-96/20970
- WO-A-98/25988
- US-A- 5 231 120

## Beschreibung

### Gebiet der Erfindung

Die Erfindung betrifft Härter für Epoxidharze sowie ein Verfahren zu ihrer Herstellung. Bei diesen Härtern handelt es sich um spezielle Verbindungen auf Basis α,β-ungesättigter Carbonsäureester. Die Erfindung betrifft weiterhin wäßrige Dispersionen mit einem Gehalt an diesen speziellen Härtern. Schließlich betrifft die Erfindung die Verwendung dieser speziellen Härter zur Beschichtung fester Substrate.

### Stand der Technik

Härtbare Epoxidharze werden seit vielen Jahren als Komponenten in Beschichtungszusammensetzungen eingesetzt. Lange Zeit galten jedoch die Eigenschaften von Beschichtungen, die unter Verwendung wäßriger Epoxidharzdispersionen hergestellt wurden, solchen Beschichtungen, in welchen das Harz in einem organischen Lösungsmittel gelöst verwendet wurde, als unterlegen. Dies wurde hauptsächlich darauf zurückgeführt, daß die verwendeten Emulgatoren - beispielsweise Nonylphenolethoxylate - zur Oberfläche des Filmes wandern und dort dessen Eigenschaften negativ beeinflussen. Eine Möglichkeit dieses Problem zu lösen, besteht in der Verwendung von sogenannten Reaktivemulgatoren, welche bei der Vernetzung des Epoxidharzes mittels eines Di- oder Polyamines oder eines anderen Härters mit dem Härter reagieren und so Bestandteil der Beschichtung werden. Wäßrige Dispersionen spezieller Reaktivemulgatoren sind aus dem Stand der Technik bekannt.

In **EP-A-605** und **US-A-4197389** wird ein Härtungsmittel, das ein Umsetzungsprodukt aus a) mindestens einer Polyepoxidverbindung, b) mindestens einem Polyalkylenpolyetherpolyol und c) mindestens einem Polyamin ist beschrieben.

In **EP-A-387418, EP-A-714924,** und **US-A-5489630** werden Epoxidhärtungsmittel beschrieben, die durch Umsetzung von Polyalkylenpolyetheraminen mit Di - und/oder Polyepoxidverbindungen zu einem Vorprodukt und Umsetzung dieses Vorproduktes mit einem primären oder sekundären Amin erhalten werden, beschrieben.

In **EP-A-717059** werden Epoxidhärtungsmittel beschrieben, die durch Umsetzung eines Polyalkylenoxidpolyethermonoalkohols mit einem Polyepoxid zu einem Vorprodukt und Umsetzung dieses Vorproduktes mit einem Polyamin erhalten werden, beschrieben.

In **EP-A-717063** werden Epoxidhärtungsmittel beschrieben, die durch Umsetzung eines Polyalkylenoxidmonoamins mit Di- und/oder Polycarbonsäuren zu einem Vorprodukt und Umsetzung dieses Vorproduktes mit einem Di- oder Polyamin erhalten werden, beschrieben.

In **EP-A-709418** wird ein Epoxidhärtungsmittel beschrieben, welches durch Reaktion von (A) einem Polyamin, (B) einer Epoxidgruppen enthaltenden Alkoxypolyethylenpolyetherverbindung und (C) einer hydrophoben Epoxidverbindung erhalten wird.

### Beschreibung der Erfindung

Aufgabe der Erfindung war die Bereitstellung von Härtern für härtbare Epoxidharze, wobei diese Härter - sofern sie nicht wasserlöslich sind - einerseits in Wasser selbstdispergierbar sein sollten, sich darüber hinaus aber auch als Dispergatoren für härtbare Epoxidharze in wäßrigen Medien eignen sollten.

Unter "selbstdispergierbar" wird dabei verstanden, daß diese Härter sich in wäßrigen Medien spontan und ohne den Einsatz zusätzlicher Additive wie Emulgier- oder Dispergieradditive dispergieren beziehungsweise emulgieren lassen. Mit anderen Worten: Bei den zu entwickelnden Härtern handelt es sich um solche, die die Eigenschaft haben, in wäßrigen Medien selbstdispergierend und/oder -emulgierend zu sein. Der Einfachheit halber wird im Rahmen der vorliegenden Erfindung hierfür der Ausdruck "selbstdispergierend" gebraucht.

Die zu entwickelnden Härter sollten insbesondere sogenannte Reaktivhärter sein, also in der Lage sein, über die genannten Eigenschaften - nämlich in Wasser selbstdispergierbar zu sein und sich darüber hinaus als Dispergatoren für härtbare Epoxidharze in wäßrigen Medien zu eignen - hinaus mit härtbaren Epoxidharzen reagieren zu können, also Härter für härtbare Epoxidharze zu sein.

Eine weitere Aufgabenstellung war es, wäßrige Dispersionen selbstdispergierbarer Härter bereitzustellen, die sich durch hohe Lagerstabilität unter praxisüblichen Lagerungsbedingungen auszeichnen sollten.

Eine weitere Aufgabenstellung war die Bereitstellung von Beschichtungs-Zusammensetzungen mit einem Gehalt an einem selbstdispergierbaren Härter, wobei die Beschichtung, die nach dem Härtungsvorgang aus der Beschichtungs-Zusammensetzung resultiert, sich durch ausgezeichnete Eigenschaften auszeichnen sollte.

Überaschenderweise wurde nun gefunden, daß Härter die erhältlich sind durch Umsetzung α,β-ungesättigter Carbonsäureester mit Mono-, Di- oder Polyaminopolyalkylenoxidverbindungen nebst anschließender Umsetzung des dabei erhaltenen Zwischenproduktes mit einer aromatischen Polyhydroxyverbindung, anschließender weiterer Umsetzung mit einem aus dem Stand der Technik bekannten Epoxidharz und anschließender Umsetzung mit ein oder mehreren primären und/oder sekundären Aminen die genannten Anforderungen in jeder Hinsicht ausgezeichnet erfüllen.

Gegenstand der vorliegenden Erfindung sind zunächst Härter für härtbare Epoxidharze, wobei die Härter dadurch erhältlich sind, daß man
(a) ein oder mehrere α,β-ungesättigte Carbonsäureester (I)

   R²R³C=C(R⁴)COOR¹ (I)

   worin der Rest R¹ ein aromatischer oder aliphatischer Rest mit bis zu 15 Kohlenstoffatomen, die Reste R², R³ und R⁴ unabhängig voneinander Wasserstoff, verzweigte oder unverzweigte, aliphatische oder aromatische Gruppen mit jeweils bis zu 20 Kohlenstoffatomen oder eine Gruppe -(CH₂)ₙ-COOR¹, worin R¹ die oben genannte Bedeutung hat und n eine Zahl im Bereich von 0 und 10 ist, bedeuten, mit
(b) ein oder mehreren Mono-, Di- oder Polyaminopolyalkylenoxid-Verbindungen umsetzt, wobei man die Verbindungen (a) und (b) in solchen Mengen einsetzt, daß das Äquivalentverhältnis der reaktiven H-Atome an den Aminostickstoffatomen von (b) zu der in Bezug auf die in der Formel (I) dargestellte zur Gruppe COOR¹ α,β-positionierte C=C-Doppelbindung in den Carbonsäureestem (a) im Bereich von 10:1 bis 1:10 liegt,
   das dabei zunächst erhaltene Zwischenprodukt Z1 anschließend mit
(c) ein oder mehreren Polyhydroxyverbindungen umsetzt, wobei man das Äquivalentverhältnis von Estergruppen in Zwischenverbindung Z1 zu Hydroxygruppen in Polyhydroxyverbindung (c) auf einen Wert im Bereich von 1 : 1,1 bis 1 - 10 einstellt
   und das hierbei erhaltene Zwischenprodukt Z2 anschließend mit
(d) ein oder mehreren Polyepoxiden umsetzt, wobei man das Äquivalentverhältnis von Oxiranringen in Polyepoxid (d) zu Hydroxylgruppen in Zwischenprodukt Z2 auf einen Wert im Bereich von 1,5 : 1 und 6 : 1 einstellt
   und das hierbei erhaltene Zwischenprodukt Z3 anschließend mit
(e) ein oder mehreren primären und/oder sekundären Aminen umsetzt, wobei man das Äquivalentverhältnis von Oxiranringen in Zwischenprodukt Z3 zu den reaktiven H-Atomen an den Aminostickstoffatomen von (e) auf einen Wert im Bereich von 1 : 1,5 bis 1 : 20 einstellt.

Die erfindungsgemäßen Härter stellen je nach ihrem Molekulargewicht entweder flüssige oder feste Substanzen dar.

Der Ausdruck "Äquivalentverhältnis" ist dem Fachmann geläufig. Der grundlegende Gedanke hinter dem Begriff des Äquivalents ist der, daß man für jede an einer Reaktion beteiligten Substanz die an der angestrebten Reaktion beteiligten reaktiven Gruppen betrachtet. Durch die Angabe eines Äquivalentverhältnisses drückt man dann aus, in welchem Zahlenverhältnis die Gesamtheit der reaktiven Gruppen der eingesetzten Verbindungen (x) und (y) zueinander stehen. Dabei ist darauf zu achten, daß unter einer reaktiven Gruppe die kleinstmögliche reaktionsfähige Gruppe zu verstehen ist - der Begriff der reaktiven Gruppe ist also nicht deckungsgleich mit dem Begriff der funktionellen Gruppe. Bei H-aciden Verbindungen bedeutet das etwa, daß zwar OH-Gruppen oder NH-Gruppen solche reaktiven Gruppen darstellen, nicht aber NH₂-Gruppen, bei denen zwei reaktive H-Atome am selben Stickstoffatom sitzen. Hier werden sinnvollerweise innerhalb der funktionellen Gruppe NH₂ die beiden Wasserstoffatome als reaktive Gruppe betrachtet, so daß die funktionelle Gruppe NH₂ zwei reaktive Gruppen, nämlich die Wasserstoffatome, aufweist.
Beispiel: Setzt man eine Verbindung (a), die pro Molekül eine zu einer Carboxylgruppe α,β-ständige olefinische Doppelbindung enthält, mit einer Verbindung (b), die pro Molekül eine NH₂-Gruppe enthält, im Sinne einer Michael-Addition um, so gilt, daß Verbindung (a) pro Molekül eine reaktive Gruppe C=C enthält, Verbindung (b) dagegen zwei reaktive - am Stickstoff gebundene - Wasserstoffatome. Wollte man nun im Äquivalentverhältnis (a) : (b) = 1 : 1 umsetzen, so müßte man ein mol (a) mit einem halben mol (b) umsetzen, denn (b) enthält ja pro Molekül zwei reaktive Gruppen. Bei einem Äquivalentverhältnis (a) : (b) = 1 : 2 müßte man dagegen 1 mol (a) mit 1 mol (b) umsetzen. Natürlich könnte man auch ein Äquivalentverhältnis von beispielsweise (a) : (b) = 1 : 10 einstellen; man müßte dann 1 mol (a) mit 5 mol (b) umsetzen. Die würde bedeuten, daß man Komponente (b) im Überschuß einsetzen würde; denn von Komponente (b) könnten theoretisch ja höchstens 1 mol mit (a) im Sinne einer Michael-Reaktion reagieren.

In einer Ausführungsform setzt man die Verbindungen (a) und (b) in solchen Mengen ein, daß das Äquivalentverhältnis der reaktiven H-Atome an den Aminostickstoffatomen von (b) zu der in Bezug auf die in der Formel (I) dargestellte zur Gruppe COOR¹ α,β-positionierte C=C-Doppelbindung in den Carbonsäureestern (a) im Bereich von 4 : 1 bis 1 : 4 und insbesondere von 2,5 : 1 bis 1,5 : 1 liegt.

In einer Ausführungsform stellt man das Äquivalentverhältnis von Estergruppen in Zwischenverbindung Z1 zu Hydroxygruppen in Polyhydroxyverbindung (c) auf einen Wert im Bereich von 1 : 1,4 bis 1 : 3 ein.

In einer Ausführungsform stellt man das Äquivalentverhältnis von Oxiranringen in Polyepoxid (d) zu Hydroxylgruppen in Zwischenprodukt Z2 auf einen Wert im Bereich von 2,5 : 1 und 3,5 : 1 ein.

Beispiele für die erfindungsgemäß einzusetzenden **α,β-ungesättigten Carbonsäureester (a)** der oben genannten Struktur (I) sind Acrylsäuremethylester, Acrylsäureethylester, Maleinsäuredimethylester, Maleinsäurediethylester, Fumarsäure-dimethylester, Fumarsäurediethylester, Itaconsäuredimethylester, Itaconsäurediethylester. Besonders bevorzugt sind dabei als Verbindungen (a) Maleinsäuredialkylester, insbesondere Maleinsäurediethylester und Maleinsäuredimethylester.

Als **Aminokomponenten (b)** dienen Mono-, Di- oder Polyaminopolyalkylenoxid-Verbindungen. Darunter ist zu verstehen, daß diese Verbindungen einerseits ein, zwei oder mehrere Amino-Funktionen (NH- bzw. NH₂-Funktionen), andererseits Alkylenoxid-Bausteine enthalten. Bei den letztgenannten Bausteinen handelt es sich insbesondere um Ethylenoxid, Propylenoxid und Butylenoxid, wobei Ethylenoxid und Propylenoxid besonders bevorzugt sind. Die Verbindungen (b) sind zumindest teilweise bei 20 °C in Wasser lösliche Substanzen.

Die Herstellung der Verbindungen (b) ist aus dem Stand der Technik bekannt und schließt die Umsetzung von Hydroxylgruppen-enthaltenden Verbindungen mit Alkylenoxiden ein, nebst anschließender Umwandlung der resultierenden terminalen Hydroxylgruppen in Aminogruppen.

Bezüglich der Umsetzung von Hydroxylgruppen-enthaltenden Verbindungen mit Alkylenoxiden sind die Ethoxylierung und die Propoxylierung von besonderer Bedeutung. Hierbei geht man üblicherweise wie folgt vor: In einem ersten Schritt bringt man die gewünschte Hydroxylgruppen-enthaltenden Verbindungen mit Ethylenoxid und/oder Propylenoxid in Kontakt und setzt dieses Gemisch in Gegenwart eines alkalischen Katalysators und Temperaturen im Bereich von 20 bis 200 °C um. Auf diese Weise werden Anlagerungsprodukte von Ethylenoxid (EO) und/oder Propylenoxid (PO) erhalten. Bei den Additionsprodukten handelt es sich vorzugsweise um EO-Addukte oder um PO-Addukte oder um EO/PO-Addukte an die jeweilige Hydroxylgruppen-enthaltenden Verbindung; bei den EO/PO-Addukten kann dabei die Anlagerung von EO und PO statistisch oder blockweise erfolgen.

In einer Ausführungsform setzt man als Verbindungen (b) Substanzen der allgemeinen Struktur R⁸-O-R⁹-CH₂CH(R¹⁰)-NH₂ ein. Darin bedeuten:
- R⁸ eine einwertige organische Gruppe mit 1-12 C-Atomen, die aliphatisch, cycloaliphatisch oder aromatisch sein kann
- R⁹ eine Polyoxyalkylengruppe, die aus 5-200 Polyoxyalkyleneinheiten, insbesondere EO- und/oder PO-Einheiten, aufgebaut ist
- R¹⁰ Wasserstoff oder ein aliphatischer Rest mit bis zu 4 C-Atomen.

Besonders geeignete Vertreter der Verbindungen (b) sind im Rahmen der vorliegenden Erfindung die dem Fachmann bekannten "Jeffamine" , bei denen es sich um handelsübliche Substanzen handelt. Beispielhaft sei hier "Jeffamin 2070" genannt, das nach Angaben der Firma Texaco durch Umsetzung von Methanol mit Ethylenoxid und Propylenoxid nebst Umwandlung der terminalen Hydroxylgruppen des zunächst erhaltenen Zwischenproduktes in Amingruppen hergestellt wird (vergleiche **WO 96/20971,** Seite 10, Zeilen 12-15).

Die Verbindungen (b) haben vorzugsweise mittlere Molekulargewichte (Zahlenmittel; Mn) im Bereich von 148 bis 5000, insbesondere zwischen 400 und 2000.

**Die Polyhydroxyverbindungen (c)** können aliphatisch oder aromatisch sein.

In einer Ausführungsform wählt man die Polyole (c) aus der Klasse spezieller aliphatischer Diole und zwar der Alkandiole, Polyetherdiole und Polyesterdiole.

Bei den **Alkandiolen** handelt es sich um Verbindungen der allgemeinen Struktur HOCH₂-R⁵-CH₂OH, worin der Rest R⁵ ein hydrophober Kohlenwasserstoffrest ist, der gesättigt oder ungesättigt, geradkettig oder verzweigt sein kann und gegebenenfalls auch aromatische Strukturelemente enthalten kann. Beispiele sind 1,6-Hexandiol, 1,7-Heptandiol und 1,8-Octandiol, ferner Polyoxytetramethylendiole - auch als Polytetrahydrofurane bekannt - sowie die sogenannten Dimerdiole.

Dimerdiole sind seit langem bekannte und im Handel erhältliche Verbindungen, die beispielsweise durch Reduktion von Dimerfettsäureestern gewonnen werden. Die diesen Dimerfettsäureestern zu Grunde liegenden Dimerfettsäuren sind Carbonsäuren, die durch Oligomerisierung ungesättigter Carbonsäuren, in der Regel Fettsäuren wie Ölsäure, Linolsäure, Erucasäure und dergleichen, zugänglich sind. Üblicherweise erfolgt die Oligomerisierung bei erhöhter Temperatur in Gegenwart eines Katalysators aus etwa Tonerde. Die dabei erhaltenen Substanzen - Dimerfettsäuren technischer Qualität - stellen Gemische dar, wobei die Dimerisierungsprodukte überwiegen. Jedoch sind auch geringe Anteile höherer Oligomerer, insbesondere die Trimerfettsäuren, enthalten. Dimerfettsäuren sind handelsübliche Produkte und werden in verschiedenen Zusammensetzungen und Qualitäten angeboten. Zu Dimerfettsäuren existiert eine reichhaltige Literatur. Beispielhaft seien hier folgende Artikel zitiert: **Fette & Öle 26 (1994), Seiten 47-51; Speciality Chemicals 1984 (Mai-Heft), Seiten 17,18, 22-24.** Dimerdiole sind in der Fachwelt gut bekannt. Beispielhaft sei hierzu auf einen jüngeren Artikel verwiesen, in dem unter anderem Herstellung, Struktur und Chemie der Dimerdiole behandelt werden: **Fat Sci. Technol. 95 (1993) Nr.3, Seiten 91 - 94.** Im Rahmen der vorliegenden Erfindung sind diejenigen Dimerdiole bevorzugt, die einen Dimergehalt von mindestens 50% und insbesondere 75% aufweisen und bei denen die Zahl der C-Atome pro Dimermolekül überwiegend im Bereich von 36 bis 44 liegt.

Unter **Polyetherdiolen** werden im Rahmen der vorliegenden Erfindung Diole der allgemeinen Struktur HOCH₂-R⁶-CH₂OH verstanden, worin der Rest R⁶ ein hydrophober Kohlenwasserstoffrest ist, der gesättigt oder ungesättigt, geradkettig oder verzweigt sein kann und gegebenenfalls auch aromatische Strukturelemente enthalten kann und bei dem zwingend ein oder mehrere CH₂-Einheiten jeweils durch ein Sauerstoffatom ersetzt sind.

Eine besonders attraktive Klasse von Polyetherdiolen ist durch Alkoxylierung von Alkandiolen wie 1,2-Ethandiol, 1,3-Propandiol, 1,2-Propandiol, 1,4-Butandiol, 1,3-Butandiol, 1,5-Pentandiol, 1,6-Hexandiol, 1,7-Heptandiol und 1,8-Octandiol, Polyoxytetramethylendiolen (Polytetrahydrofuranen) und Dimerdiolen zugänglich. Bei der Herstellung dieser alkoxylierten Diole geht man üblicherweise wie folgt vor: In einem ersten Schritt bringt man das gewünschte Diol mit Ethylenoxid und/oder Propylenoxid in Kontakt und setzt dieses Gemisch in Gegenwart eines alkalischen Katalysators und Temperaturen im Bereich von 20 bis 200 °C um. Auf diese Weise werden Anlagerungsprodukte von Ethylenoxid (EO) und/oder Propylenoxid (PO) an das eingesetzte Diol erhalten. Bei den Additionsprodukten handelt es sich mithin um EO-Addukte oder um PO-Addukte oder um EO/PO-Addukte an das jeweilige Diol; bei den EO/PO-Addukten kann dabei die Anlagerung von EO und PO statistisch oder blockweise erfolgen.

Unter **Polyesterdiolen** werden im Rahmen der vorliegenden Erfindung Diole der allgemeinen Struktur HOCH₂-R⁷-CH₂OH verstanden, worin der Rest R⁷ ein hydrophober Kohlenwasserstoffrest ist, der gesättigt oder ungesättigt, geradkettig oder verzweigt sein kann und gegebenenfalls auch aromatische Strukturelemente enthalten kann und bei dem zwingend ein oder mehrere CH₂-Einheiten jeweils durch eine COO-Einheit ersetzt sind. Zur Herstellung werden üblicherweise difunktionelle Polyole mit Dicarbonsäuren oder deren Anhydriden umgesetzt. Häufig verwendete Polyole sind Ethylenglykol, 1,2-Propandiol, 1,4-Butandiol, 1,6-Hexandiol. Übliche Dicarbonsäuren sind Bernsteinsäure, Adipinsäure, Phthalsäureanhydrid. Besonders bevorzugt sind dabei 1,6-Hexandiol-Adipinsäurepolyester.

Beispiele für geeignete aromatische **Verbindungen (c)** sind: Resorcin, Hydrochinon, 2,2-Bis-(4-hydroxyphenyl)propan (Bisphenol A), Isomerengemische des Dihydroxydiphenylmethans (Bisphenol F), Tetrabrombisphenol A, 4,4'-dihydroxy-diphenylcyclohexan, 4,4'-dihydroxy-3,3-dimethyldiphenylpropan, 4,4'-Dihydroxydiphenyl, 4,4'-Dihydroxy-benzophenol, Bis-(4-hydroxyphenyl)-1,1-ethan, Bis-(4-hydroxyphenyl)-1,1-isobutan, Bis-(4-hydroxyphenyl)-methan, Bis-(4-hydroxyphenyl)-ether, Bis-(4-hydroxy-phenyl)-sulfon u.a. sowie die Chlorierungs- und Bromierungsprodukte der vorstehend genannten Verbindungen. Bisphenol A ist als Verbindung (c) ganz besonderes bevorzugt.

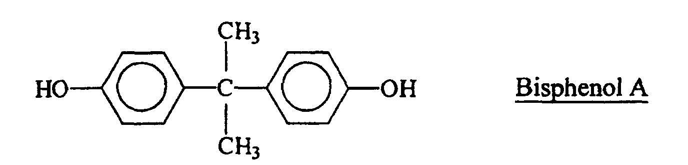

Bei den **Epoxidverbindungen (d)** handelt es sich um Polyepoxide mit im Mittel mindestens zwei Epoxidgruppen pro Molekül. Diese Epoxidverbindungen können dabei sowohl gesättigt als auch ungesättigt sowie aliphatisch, cycloaliphatisch, aromatisch oder heterocyclisch sein und auch Hydroxylgruppen aufweisen. Sie können weiterhin solche Substituenten enthalten, die unter den Mischungs- und Reaktionsbedingungen keine störenden Nebenreaktionen verursachen, beispielsweise Alkyl- oder Arylsubstituenten, Ethergruppierungen und ähnliche. Vorzugsweise handelt es sich bei diesen Epoxidverbindungen um Polyglycidylether auf der Basis von mehrwertigen, vorzugsweise zweiwertigen Alkoholen, Phenolen Hydrierungsprodukten dieser Phenole und/oder von Novolacken (Umsetzungsprodukte von ein- oder mehrwehrtigen Phenolen mit Aldehyden, insbesondere Formaldehyd in Gegenwart saurer Katalysatoren). Die Epoxidäquivalentgewichte dieser Epoxidverbindungen liegen vorzugsweise zwischen 160 und 500, insbesondere zwischen 170 und 250. Das Epoxidäquivalentgewicht einer Substanz ist dabei als diejenige Menge der Substanz (in Gramm) definiert, welche 1 mol Oxiranringe enthält.
Als mehrwertige Phenole kommen vorzugsweise die unter (c) beschriebenen Verbindungen in Frage. Auch die Polyglycidylether von mehrwertigen Alkoholen sind geeignet. Als Beispiele derartiger mehrwertiger Alkohole seien Ethylenglykol, Diethylenglykol, Triethylenglykol, 1,2-Propylenglykol, Polyoxypropylenglykole (n = 1 - 20), 1,3-Propylenglykol, 1,4-Butylenglykol, 1,5-Pentandiol, 1,6-Hexandiol, 1,2,6-Hexantriol, Glycerin und Bis-(4-hydroxycyclohexyl)-2,2-propan genannt.

Es können auch Polyglycidylether von Polycarbonsäuren als Verbindungen (d) verwendet werden, die man durch die Umsetzung von Epichlorhydrin oder ähnlichen Epoxyverbindungen mit einer aliphatischen, cycloaliphatischen oder aromatischen Polycarbonsäure, wie Oxalsäure, Bernsteinsäure, Adipinsäure, Glutarsäure, Phthalsäure, Terephthalsäure, Hexahydrophthalsäure, 2,6-Naphthalindicarbonsäure und dimerisierte Linolensäure, erhält. Beispiele sind Adipinsäurediglycidylester, Phthalsäurediglycidylester und Hexahydrophthalsäurediglycidylester.

Eine ausführliche Aufzählung geeigneter Epoxidverbindungen (d) findet sich in:
- **A.M. Paquin, Handbuch "Epoxidverbindungen und Epoxidharze",** Springer-Verlag, Berlin 1958, Kapitel V, Seiten 308 bis 461; ferner in:
- **Lee, Neville "Handbook of Epoxy Resins",** 1967, Kapitel 2, Seiten 2-1 bis 2-33.

Es können auch Mischungen von mehreren Epoxidverbindungen (d) verwendet werden.

Als **Amine (e)** kommen im Rahmen der vorliegenden Erfindung primäre und/oder sekundäre Amine zum Einsatz. Vorzugsweise setzt man als Amine (e) Polyamine mit mindestens zwei Stickstoffatomen und mindestens zwei aktiven Amino-Wasserstoffatomen pro Molekül ein. Es können aliphatische, aromatische, aliphatisch-aromatische, cycloaliphatische und heterocyclische Di- und Polyamine benutzt werden.

Beispiele für geeignete Amine (e) sind: Polyethylenamine (Ethylendiamin, Diethylentriamin, Triethylentetramin, Tetraethylenpentamin, usw.), 1,2-Propylendiamin, 1,3-Propylendiamin, 1,4-Butandiamin, 1,5-Pentandiamin, 1,3-Pentandiamin, 1,6-Hexandiamin, 3,3,5-Trimethyl-1,6-hexandiamin, 3,5,5-Trimethyl-1,6-hexandiamin, 2-Methyl-1,5-pentandiamin, Bis(3-aminopropyl)amin, N,N'-Bis(3-aminopropyl)-1,2-ethandiamin, N-(3-aminopropyl)-1,2-ethandiamin, 1,2-diaminocyclohexan, 1,3-Diaminocyclohexan, 1,4-Diaminocyclohexan, Aminoethylpiperazine, die Poly(alkylenoxid)diamine und Triamine (wie z.B. Jeffamine D-230, Jeffamine D-400, Jeffamine D-2000, Jeffamine D-4000, Jeffamine T-403, Jeffamine EDR-148, Jeffamine EDR-192, Jeffamine C-346, Jeffamine ED-600, Jeffamine ED-900, Jeffamine ED-2001), meta-Xylylendiamin, Phenylendiamin, 4,4'-Diaminodiphenylmethan, Toluoldiamin, Isophorondiamin, 3,3'-Dimethyl-4,4'-diaminodicyclohexylmethan, 4,4'-Diaminodicyclohexylmethan, 2,4'-Diaminodicyclohexylmethan, die Mischung der über eine Methylenbrücke verknüpften Poly(cyclohexyl-aromischen)amine (auch als MBPCAA bekannt) und Polyaminoamide.
Des weiteren kommen als Verbindungen (e) auch die Reaktionsprodukte der Umsetzung der gerade genannten Amine mit den oben beschriebenen α,β-ungesättigten Carbonsäureestern (a) in Frage, ferner die Reaktionsprodukte der Umsetzung gerade genannten Amine mit den oben beschriebenen Polyepoxidverbindungen (d).

Ein weiterer Gegenstand der Erfindung ist ein Verfahren zur Herstellung von Härtern für härtbare Epoxidharze, wobei man
(a) ein oder mehrere α,β-ungesättigte Carbonsäureester (I)

   R²R³C=C(R⁴)COOR¹ (I)

   worin der Rest R¹ ein aromatischer oder aliphatischer Rest mit bis zu 15 Kohlenstoffatomen, die Reste R², R³ und R⁴ unabhängig voneinander Wasserstoff, verzweigte oder unverzweigte, aliphatische oder aromatische Gruppen mit jeweils bis zu 20 Kohlenstoffatomen oder eine Gruppe -(CH₂)ₙ-COOR¹, worin R¹ die oben genannte Bedeutung hat und n eine Zahl im Bereich von 0 und 10 ist, bedeuten, mit
(b) ein oder mehreren Mono-, Di- oder Polyaminopolyalkylenoxid-Verbindungen umsetzt, wobei man die Verbindungen (a) und (b) in solchen Mengen einsetzt, daß das Äquivalentverhältnis der reaktiven H-Atome an den Aminostickstoffatomen von (b) zu der in Bezug auf die in der Formel (I) dargestellte zur Gruppe COOR¹ α,β-positionierte C=C-Doppelbindung in den Carbonsäureestem (a) im Bereich von 10:1 bis 1:10 liegt,
   das dabei zunächst erhaltene Zwischenprodukt Z1 anschließend mit
(c) ein oder mehreren Polyhydroxyverbindungen umsetzt, wobei man das Äquivalentverhältnis von Estergruppen in Zwischenverbindung Z1 zu Hydroxygruppen in Polyhydroxyverbindung (c) auf einen Wert im Bereich von 1 : 1,1 bis 1 - 10 einstellt
   und das hierbei erhaltene Zwischenprodukt Z2 anschließend mit
(d) ein oder mehreren Polyepoxiden umsetzt, wobei man das Äquivalentverhältnis von Oxiranringen in Polyepoxid (d) zu Hydroxylgruppen in Zwischenprodukt Z2 auf einen Wert im Bereich von 1,5 : 1 und 6 : 1 einstellt
   und das hierbei erhaltene Zwischenprodukt Z3 anschließend mit
(e) ein oder mehreren primären und/oder sekundären Aminen umsetzt, wobei man das Äquivalentverhältnis von Oxiranringen in Zwischenprodukt Z3 zu den reaktiven H-Atomen an den Aminostickstoffatomen von (e) auf einen Wert im Bereich von 1 : 1.5 bis 1 : 20 einstellt.

Ein weiterer Gegenstand der Erfindung sind wäßrige Dispersionen mit einem Gehalt an den erfindungsgemäßen Härtern. Vorzugsweise liegt der Gehalt an den erfindungsgemäßen Härtern in diesen Dispersionen im Bereich von 4U bis 70 Gew-.% - bezogen auf die gesamte Dispersion.

Bei der Herstellung wäßriger Dispersionen der erfindungsgemäßen Härter verfährt man in der Regel wie folgt: Die Zugabe des Wassers zu den Härtern erfolgt unter starkem Rühren bei ungefähr 60 °C. Dabei bildet sich mit gut wasserlöslichen Härtern eine wässerige Lösung und mit schwer wasserlöslichen Härtern anfänglich eine w/o Dispersion, die sich bei weiterer Wasserzugabe schließlich in eine o/w Dispersion umkehrt.

Wäßrige Dispersionen mit einem Gehalt der nach dem erfindungsgemäßen Verfahren zugänglichen Härtern zeichnen sich in vielen Fällen durch sehr geringe mittlere Teilchengrößen aus, die im Bereich von etwa 500 nm oder weniger liegen.

Dies führt zu sehr guten Materialeigenschaften der mit diesen Dispersionen hergestellten Beschichtungen. Besonders gute Materialeigenschaften werden erhalten, wenn die mittlere Teilchengröße unterhalb von etwa 300 nm liegt. Die mittlere Teilchengröße ist dabei zu verstehen als Durchschnittswert der Teilchengrößen, der durch Summieren der Werte von n Einzelmessungen und anschließende Division durch n erhalten wird. Die mittleren Teilchengrößen wurden im Rahmen der vorliegenden Erfindung mittels eines "Coulter N4 Plus Submicron Particle Sizer" der Firma Coulter, Miami FL, 33196, USA bestimmt. Dabei wird die Streuung von Laserlicht an einer stark verdünnten Dispersion zur Teilchengrößen-Bestimmung genutzt. Das Gerät führt eine Vielzahl von Einzelmessungen aus und liefert als Ergebnis die mittlere Teilchengröße. Die oben genannten Werte beziehen sich auf Messungen der Streuung unter einem Winkel von 90° relativ zum einfallenden Laserstrahl.

Die erfindungsgemäßen Reaktivhärter eignen sich in Kombination mit geeigneten Epoxidharzen und Zusatzstoffen zur Herstellung von Überzügen, Zwischenbeschichtungen, Anstrichmaterialien, Formmassen und härtbaren Massen für die unterschiedlichsten Anwendungsgebiete. Beispielsweise können sie zur Herstellung von Schutz- und/oder Dekorbeschichtungen auf den unterschiedlichsten, insbesondere rauhen und porösen Substraten, wie z.B. Holz, mineralischen Untergründen (z.B. Beton und Stein), Glas, Kunststoffen (z.B. Polyethylen, Polypropylen), Kompostwerkstoffen, Keramik und vorbehandelten oder nicht vorbehandelten Metallen verwendet werden. Durch ihre guten Eigenschaften sind die erfindungsgemäßen Härter auch hervorragend für die Einschichtlackierung geeignet. Die haftende Überzugsschicht kann als solche unverändert bleiben, sie kann aber auch als Zwischenschicht, also als Unterlage für weitere Beschichtungen, dienen, die wiederum aus demselben oder einem anderen üblichen Beschichtungsmaterial bestehen können. Wegen ihrer guten Verdünnbarkeit und ihrer günstigen Eigenschaften eignen sich die erfindungsgemäßen Härtern bzw. die aus den erfindungsgemäßen Härtern hergestellten Dispersionen auch zur zusätzlichen Verwendung in der Elektrotauchlackierung. eine weitere Möglichkeit ist die Verwendung der erfindungsgemäßen Härter zur Herstellung wasserverdünnbarer Klebstoffe. Auch als Bindemittel für textile, organische und/oder anorganische Materialien sind sie einsetzbar. Ferner können sie auch als Zusatz zu Kunststoffzementen dienen.

Ein weiterer Gegenstand der Erfindung ist dementsprechend die Verwendung der erfindungsgemäßen Härter für Systeme (Zusammensetzungen) zur Beschichtung fester Substrate.

Beim Einsatz der erfindungsgemäßen Härter zur Aushärtung von Epoxidharzen können auch weitere geeignete Härter (z.B. Polymercaptane, Polyisocyanate, Imidazole, Polyamidoamine und alle Amine (e)) sowie die üblicherweise in der Beschichtungsindustrie verwendeten Zusatzstoffe zum Einsatz kommen.

### BEISPIELE

Im folgenden wird der dem Fachmann vertraute spezielle Begriff des "Epoxidäquivalentgewichts" benutzt. Das Epoxidäquivalentgewicht einer Substanz ist diejenige Menge der Substanz (in Gramm), welche 1 mol Oxiranringe enthält.

Zur Bestimmung der mittleren Teilchengrößen in den Beispielen 3 und 4 wurde ein "Coulter N4 Plus Submicron Particle Sizer" der Firma Coulter, Miami FL, 33196, USA eingesetzt. Die gemessenen Werte beziehen sich auf Messungen der Streuung unter einem Winkel von 90° relativ zum einfallenden Laserstrahl.

### I. Vorprodukte

### Beispiel 1

Zu 200.0 g Monoaminopolyethylenoxid ("Jeffamine M 2070" der Firma Huntsman) wurden unter Rühren bei 80 °C 17.5 g Diethylmaleat zugetropft und anschließend weitere 60 min bei 80 °C gerührt. Anschließend wurden 91.3 g Bisphenol A und 0.5 g Triphenylphosphin zugegeben, die Mischung 2 h auf 200 °C erhitzt und dann, nach Zugabe von 456.0 g Chemres E20 (Bisphenol-A basiertes Epoxidharz der Firma Henkel SpA mit einem mittleren Epoxidäquivalentgewicht von ungefähr 190 g) weitere 2 h bei 200 °C erhitzt. Nach Beendigung der Reaktion wurde mit 100 ml Ethoxypropanol verdünnt.

### Beispiel 2

Zu 100.0 g Diaminopolyethylenoxid ("Jeffamine ED 2001" der Firma Huntsman) wurden unter Rühren bei 80 °C 17.5 g Diethylmaleat zugetropft und anschließend weitere 60 min bei 80 °C gerührt. Anschließend wurden 91.3 g Bisphenol A und 0.5 g Triphenylphosphin zugegeben, die Mischung 2 h auf 200 °C erhitzt und dann, nach Zugabe von 456.0 g Chemres E20 (Bisphenol-A basiertes Epoxidharz der Firma Henkel SpA mit einem mittleren Epoxidäquivalentgewicht von ungefähr 190 g) weitere 2 h bei 200 °C erhitzt. Nach Beendigung der Reaktion wurde mit 100 ml Ethoxypropanol verdünnt.

### II. Erfindungsgemäße Härter

### Beispiel 3

226.2 g des gemäß Beispiel 1 hergestellten Vorproduktes wurden bei 100 °C zu 85.2 g IPDA (5-Amino-1,3,3-trimethyl-cyclohexanmethanamin = Isophorondiamin) zugetropft und anschließend noch 1 Stunde bei 80 °C gerührt.

### Beispiel 4

200.0 g des gemäß Beispiel 2 hergestellten Vorproduktes wurden bei 80 °C zu 132.6 g MXDA (3-(Aminomethyl)benzylamin) zugetropft und noch 1 Stunde bei 80 °C gerührt. Anschließend wurde das freie Amin im Vakuum abdestilliert.

### III. Wäßrige Dispersionen der Härter

### Beispiel 5

Zu 200 g des gemäß Beispiel 3 hergestellten Härters wurden unter starkem Rühren bei 60 °C 200 g Wasser langsam zugetropft. Die so erhaltene Dispersion besaß eine mittlere Teilchengröße von ca. 130 nm.

### Beispiel 6

Zu 200 g des gemäß Beispiel 4 hergestellten Vorproduktes wurden unter starkem Rühren bei 60 °C 200 g Wasser langsam zugetropft. Die so erhaltene Dispersion besaß eine mittlere Teilchengröße von ca. 430 nm.

## Patentansprüche

1. Härter für härtbare Epoxidharze, wobei diese Härter dadurch erhältlich sind, daß man
(a) ein oder mehrere α,β-ungesättigte Carbonsäureester (I)
R²R³C=C(R⁴)COOR¹ (I)
worin der Rest R¹ ein aromatischer oder aliphatischer Rest mit bis zu 15 Kohlenstoffatomen, die Reste R², R³ und R⁴ unabhängig voneinander Wasserstoff, verzweigte oder unverzweigte, aliphatische oder aromatische Gruppen mit jeweils bis zu 20 Kohlenstoffatomen oder eine Gruppe - (CH₂)ₙ-COOR¹, worin R¹ die oben genannte Bedeutung hat und n eine Zahl im Bereich von 0 und 10 ist, bedeuten, mit
(b) ein oder mehreren Mono-, Di- oder Polyaminopolyalkylenoxid-Verbindungen umsetzt, wobei man die Verbindungen (a) und (b) in solchen Mengen einsetzt, daß das Äquivalentverhältnis der reaktiven H-Atome an den Aminostickstoffatomen von (b) zu der in Bezug auf die in der Formel (I) dargestellte zur Gruppe COOR¹ α,β-positionierte C=C-Doppelbindung in den Carbonsäureestem (a) im Bereich von 10:1 bis 1:10 liegt,
das dabei zunächst erhaltene Zwischenprodukt Z1 anschließend mit
(c) ein oder mehreren Polyhydroxyverbindungen umsetzt, wobei man das Äquivalentverhältnis von Estergruppen in Zwischenverbindung Z1 zu Hydroxygruppen in Polyhydroxyverbindung (c) auf einen Wert im Bereich von 1 : 1,1 bis 1 - 10 einstellt
und das hierbei erhaltene Zwischenprodukt Z2 anschließend mit
(d) ein oder mehreren Polyepoxiden umsetzt, wobei man das Äquivalentverhältnis von Oxiranringen in Polyepoxid (d) zu Hydroxylgruppen in Zwischenprodukt Z2 auf einen Wert im Bereich von 1,5 : 1 und 6 : 1 einstellt
und das hierbei erhaltene Zwischenprodukt Z3 anschließend mit
(e) ein oder mehreren primären und/oder sekundären Aminen umsetzt, wobei man das Äquivalentverhältnis von Oxiranringen in Zwischenprodukt Z3 zu den reaktiven H-Atomen an den Aminostickstoffatomen von (e) auf einen Wert im Bereich von 1 : 1,5 bis 1 : 20 einstellt.

2. Härter nach Anspruch 1, wobei man als Komponente (a) ein oder mehrere Maleinsäuredialkylester einsetzt.

3. Härter nach Anspruch 1 oder 2, wobei man als Komponente (b) ein oder mehrere Monoaminopolyethylenoxid-Verbindungen einsetzt.

4. Härter nach einem der Ansprüche 1 bis 3, wobei man als Komponente (c) Bisphenol A einsetzt.

5. Wäßrige Dispersionen mit einem Gehalt an einem oder mehreren der Härter gemäß den Ansprüchen 1 bis 4.

6. Wäßrige Dispersionen gemäß Anspruch 5, wobei die mittler Teilchengröße der dispergierten Teilchen etwa 500 nm oder weniger beträgt.

7. Verfahren zur Herstellung von Härtern für härtbare Epoxidharze, **dadurch gekennzeichnet, daß** man
(a) ein oder mehrere α,β-ungesättigte Carbonsäureester (I)
R²R³C=C(R⁴)COOR¹ (I)
worin der Rest R¹ ein aromatischer oder aliphatischer Rest mit bis zu 15 Kohlenstoffatomen, die Reste R², R³ und R⁴ unabhängig voneinander Wasserstoff, verzweigte oder unverzweigte, aliphatische oder aromatische Gruppen mit jeweils bis zu 20 Kohlenstoffatomen oder eine Gruppe - (CH₂)ₙ-COOR¹, worin R¹ die oben genannte Bedeutung hat und n eine Zahl im Bereich von 0 und 10 ist, bedeuten, mit
(b) ein oder mehreren Mono-, Di- oder Polyaminopolyalkylenoxid-Verbindungen umsetzt, wobei man die Verbindungen (a) und (b) in solchen Mengen einsetzt, daß das Äquivalentverhältnis der reaktiven H-Atome an den Aminostickstoffatomen von (b) zu der in Bezug auf die in der Formel (I) dargestellte zur Gruppe COOR¹ α,β-positionierte C=C-Doppelbindung in den Carbonsäureestern (a) im Bereich von 10:1 bis 1:10 liegt,
das dabei zunächst erhaltene Zwischenprodukt Z1 anschließend mit
(c) ein oder mehreren Polyhydroxyverbindungen umsetzt, wobei man das Äquivalentverhältnis von Estergruppen in Zwischenverbindung Z1 zu Hydroxygruppen in Polyhydroxyverbindung (c) auf einen Wert im Bereich von 1 : 1,1 bis 1 - 10 einstellt
und das hierbei erhaltene Zwischenprodukt Z2 anschließend mit
(d) ein oder mehreren Polyepoxiden umsetzt, wobei man das Äquivalentverhältnis von Oxiranringen in Polyepoxid (d) zu Hydroxylgruppen in Zwischenprodukt Z2 auf einen Wert im Bereich von 1,5 : 1 und 6 : 1 einstellt
und das hierbei erhaltene Zwischenprodukt Z3 anschließend mit
(e) ein oder mehreren primären und/oder sekundären Aminen umsetzt, wobei man das Äquivalentverhältnis von Oxiranringen in Zwischenprodukt Z3 zu den reaktiven H-Atomen an den Aminostickstoffatomen von (e) auf einen Wert im Bereich von 1 : 1,5 bis 1 : 20 einstellt.

8. Verwendung der Härter gemäß einem der Ansprüche 1 bis 4 für Systeme zur Herstellung von Beschichtungen fester Substrate.

## Claims

1. Hardeners for curable epoxy resins obtainable by
(a) reacting one or more α,β-unsaturated carboxylic acid esters (I)
R²R³C=C(R⁴)COOR¹ (I)
where R¹ is an aromatic or aliphatic radical containing up to 15 carbon atoms, the substituents R², R³ and R⁴ independently of one another represent hydrogen, branched or unbranched, aliphatic or aromatic groups containing up to 20 carbon atoms or a group -(CH₂)ₙ-COOR¹, where R¹ is as defined above and n is a number of 0 to 10, with
(b) one or more mono-, di- or polyaminopolyalkylene oxide compounds, compounds (a) and (b) being used in such quantities that the equivalent ratio of the reactive hydrogen atoms at the aminonitrogen atoms of (b) to the C=C double bond in the α,β-position to the group COOR¹ shown in formula (I) in the carboxylic acid esters (a) is in the range from 10:1 to 1:10,
subsequently reacting the intermediate product Z1 obtained with
(c) one or more polyhydroxy compounds, the equivalent ratio of ester groups in the intermediate compound Z1 to hydroxy groups in the polyhydroxy compound (c) being adjusted to a value of 1:1.1 to 1-10,
and subsequently reacting the intermediate product Z2 obtained with
(d) one or more polyepoxides, the equivalent ratio of oxirane rings in polyepoxide (d) to hydroxyl groups in the intermediate product Z2 being adjusted to a value of 1.5:1 to 6:1,
and subsequently reacting the intermediate product Z3 obtained with
(e) one or more primary and/or secondary amines, the equivalent ratio of oxirane rings in the intermediate product Z3 to the reactive H atoms at the aminonitrogen atoms of (e) being adjusted to a value of 1:1.5 to 1:20.

2. Hardeners as claimed in claim 1, **characterized in that** one or more dialkyl maleates is/are used as component (a).

3. Hardeners as claimed in claim 1 or 2, **characterized in that** one or more monoaminopolyethylene oxide compounds is/are used as component (b).

4. Hardeners as claimed in any of claims 1 to 3, **characterized in that** bisphenol A is used as component (c).

5. Aqueous dispersions containing one or more of the hardeners claimed in claims 1 to 4.

6. Aqueous dispersions as claimed in claim 5, **characterized in that** the mean particle size of the dispersed particles is about 500 nm or less.

7. A process for the production of hardeners for curable epoxy resins, **characterized in that** it comprises the steps of
(a) reacting one or more α,β-unsaturated carboxylic acid esters (I)
R²R³C=C(R⁴)COOR¹ (I)
where R¹ is an aromatic or aliphatic radical containing up to 15 carbon atoms, the substituents R², R³ and R⁴ independently of one another represent hydrogen, branched or unbranched, aliphatic or aromatic groups containing up to 20 carbon atoms or a group -(CH₂)ₙ-COOR¹, where R¹ is as defined above and n is a number of 0 to 10, with
(b) one or more mono-, di- or polyaminopolyalkylene oxide compounds, compounds (a) and (b) being used in such quantities that the equivalent ratio of the reactive hydrogen atoms at the aminonitrogen atoms of (b) to the C=C double bond in the α,β-position to the group COOR¹ shown in formula (I) in the carboxylic acid esters (a) is in the range from 10:1 to 1:10,
subsequently reacting the intermediate product Z1 obtained with
(c) one or more polyhydroxy compounds, the equivalent ratio of ester groups in the intermediate compound Z1 to hydroxy groups in the polyhydroxy compound (c) being adjusted to a value of 1:1.1 to 1-10,
and subsequently reacting the intermediate product Z2 obtained with
(d) one or more polyepoxides, the equivalent ratio of oxirane rings in polyepoxide (d) to hydroxyl groups in the intermediate product Z2 being adjusted to a value of 1.5:1 to 6:1,
and subsequently reacting the intermediate product Z3 obtained with
(e) one or more primary and/or secondary amines, the equivalent ratio of oxirane rings in the intermediate product Z3 to the reactive H atoms at the aminonitrogen atoms of (e) being adjusted to a value of 1:1.5 to 1:20.

8. The use of the hardeners claimed in any of claims 1 to 4 for systems for the production of coatings on solid substrates.

## Revendications

1. Durcisseur pour résines époxy durcissables dans lequel ces durcisseurs sont accessibles selon un procédé dans lequel on fait réagir :
(a) un ou plusieurs ester(s) d'acide carboxylique α, β non saturé (I)
R²R³C=C(R⁴)COOR¹ (I)
dans lequel le reste R¹ signifie un reste aromatique ou aliphatique ayant jusqu'à 15 atomes de carbone, les restes R², R³ et R⁴ indépendamment les uns des autres signifient de l'hydrogène, des groupes aliphatiques ou aromatiques ramifiés ou non ramifiés ayant respectivement jusqu'à 20 atomes de carbone ou un groupe (CH₂)ₙ-COOR¹, R¹ ayant les significations mentionnées ci-dessus et n est un nombre dans la plage de 0 et 10, avec
(b) un ou plusieurs composés de mono-, di- ou polyaminopolyoxyde d'alkylène, les composés (a) et (b) étant en quantités telles que le rapport en équivalents des atomes d'H réactifs sur les atomes d'azote aminé de (b) pour la double liaison C=C en position α, β par rapport au groupe COOR¹ représenté dans la formule (I), se situe dans les esters d'acide carboxylique (a) dans la plage de 10 : 1 à 1 : 10,
on fait réagir le produit intermédiaire Z1 obtenu en premier lieu, ensuite avec,
(c) un ou plusieurs composé(s) polyhydroxylé(s) dans lesquels on ajuste le rapport en équivalent des groupes ester dans le composé intermédiaire Z1 pour les groupes hydroxy dans le composé polyhydroxylé (c) à une valeur dans la plage de 1:1,1 à 1:10 et,
on fait réagir le produit intermédiaire Z2 obtenu de cette manière, ensuite avec
(d) un ou plusieurs polyépoxyde(s) pour lesquels on ajuste le rapport en équivalent des cycles oxyrane dans le polyépoxyde (d) aux groupes hydroxyle dans le produit intermédiaire Z2, à une valeur dans la plage de 1,5:1 et 6:1 et
on fait réagir le produit intermédiaire Z3 obtenu de cette façon, ensuite avec
(e) une ou plusieurs amine(s) primaire(s) et/ou secondaire(s) pour lesquelles on ajuste le rapport en équivalent des cycles oxirane dans le produit intermédiaire Z3 aux atomes d'H réactifs sur les atomes d'azote aminés de (e), à une valeur dans la plage de 1:1,5 à 1:20.

2. Durcisseur selon la revendication 1,
pour lequel
on met en oeuvre comme composant (a) un ou plusieurs ester(s) de dialkyle d'acide maléique.

3. Durcisseur selon l'une quelconque des revendications 1 ou 2,
pour lequel
on met en oeuvre comme composant (b) un ou plusieurs composé(s) monoaminopolyoxyde d'éthèlène.

4. Durcisseur selon l'une quelconque des revendications 1 à 3,
pour lequel
on met en oeuvre comme composant (c) du bisphénol A.

5. Dispersions aqueuses ayant une teneur en un ou plusieurs des durcisseurs conformément aux revendications 1 à 4.

6. Dispersion aqueuses conformément à la revendication 5,
dans lesquelles la taille moyenne de particules des particules en dispersion s'élève à par exemple 500 nm ou moins.

7. Procédé de préparation de durcisseurs pour résines époxyde durcissables,
**caractérisé en ce qu'**
on fait réagir
(a) un ou plusieurs ester(s) d'acide carboxylique α, β non saturé (I)
R²R³C=C(R⁴)COOR¹ (I)
dans lequel le reste R¹ signifie un reste aromatique ou aliphatique ayant jusqu'à 15 atomes de carbone, les restes R², R³ et R⁴ indépendamment les uns des autres signifient de l'hydrogène, des groupes aliphatiques ou aromatiques ramifiés ou non ramifiés ayant respectivement jusqu'à 20 atomes de carbone ou un groupe (CH₂)ₙ-COOR¹, dans lequel R¹ a les significations mentionnées ci-dessus et n est un nombre dans la plage de 0 et 10, avec
(b) un ou plusieurs composés de mono-, di- ou polyaminopolyoxyde d'alkylène, les composés (a) et (b) étant en quantités telles que le rapport en équivalents des atomes d'H réactifs sur les atomes d'azote aminé de (b) pour la double liaison C=C en position α, β par rapport au groupe COOR¹ représenté dans la formule (I), se situe dans les esters d'acide carboxylique (a) dans la plage de 10 : 1 à 1 : 10,
on fait réagir le produit intermédiaire Z1 obtenu en premier lieu, ensuite avec,
(c) un ou plusieurs composé(s) polyhydroxylé(s) dans lesquels on ajuste le rapport en équivalent des groupes ester dans le composé intermédiaire Z1 pour les groupes hydroxy dans le composé polyhydroxylé (c) à une valeur dans la plage de 1:1,1 à 1:10 et,
on fait réagir le produit intermédiaire Z2 obtenu de cette manière, ensuite avec
(d) un ou plusieurs polyépoxyde(s) pour lesquels on ajuste le rapport en équivalent des cycles oxyrane dans le polyépoxyde (d) aux groupes hydroxyle dans le produit intermédiaire Z2, à une valeur dans la plage de 1,5:1 et 6:1 et
on fait réagir le produit intermédiaire Z3 obtenu de cette façon, ensuite avec
(e) une ou plusieurs amine(s) primaire(s) et/ou secondaire(s) pour lesquelles on ajuste le rapport en équivalent des cycles oxirane dans le produit intermédiaire Z3 aux atomes d'H réactifs sur les atomes d'azote aminés de (e), à une valeur dans la plage de 1:1,5 à 1:20.

8. Utilisation des durcisseurs selon l'une quelconque des revendications 1 à 4, pour des systèmes pour la production de revêtements de substrats solides.
